# EUROPEAN PATENT SPECIFICATION

(11) **EP 4 457 177 B1**
(45) Date of publication and mention of the grant of the patent: **19.08.2026**
(21) Application number: 22822697.3
(22) Date of filing: 06.12.2022
(51) Int. Cl.: C01B 3/22

(54) **A METHOD FOR PRODUCING HYDROGEN CONTAINING GAS**
VERFAHREN ZUR HERSTELLUNG VON WASSERSTOFFHALTIGEM GAS
PROCÉDÉ DE PRODUCTION DE GAZ CONTENANT DE L'HYDROGÈNE

(30) Priority: 06.12.2021 NL 2030045
(43) Date of publication of application: 06.11.2024
(73) Proprietor: Dens B.V., 5708 JZ Helmond (NL)
(72) Inventor: SWINKELS, Martinus Arnoldus Petrus Maria, 5708 JZ Helmond (NL); AERTS, Max Joannes Robertus, 5708 JZ Helmond (NL); DE LAAT, Yoshi Johannes Henricus Jacobus, 5708 JZ Helmond (NL)
(74) Representative: Arnold & Siedsma
(86) International application number: PCT/NL2022/050704
(87) International publication number: WO 2023/106919

(56) References cited:
- WO-A1-2020/035307
- US-A1- 2007 231 632
- US-A1- 2018 375 137

## Description

### FIELD OF THE INVENTION

The present invention relates to a method for starting up a reactor for producing a hydrogen containing gas, and the system for making such. The method and system are designed to decompose a substance to release hydrogen, which hydrogen can be used by for example a fuel cell to generate power.

### BACKGROUND OF THE INVENTION

A hydrogen generation electricity system for producing hydrogen using a hydrogen carrier substance is generally known. The hydrogen carrier substance may be a liquid hydrogen carrier substance, such as methanol and formic acid. The hydrogen generation system comprises a carrier reservoir for storing the hydrogen carrier substance, a reaction chamber arranged for generating a H₂ gas stream by converting the hydrogen carrier substance, wherein the H₂ gas stream comprises hydrogen. The reaction chamber comprises an inlet arranged for receiving the hydrogen carrier substance from the carrier reservoir. The system further comprises an output conduit for exiting the H₂ gas stream from the reaction chamber. In case of converting formic acid in the reaction chamber a H₂ gas stream is produced, which contains hydrogen gas and carbon dioxide gas.

Optionally, the output conduit of the hydrogen generation system may be directly coupled to a fuel cell. The fuel cell is arranged to produce electric energy by converting hydrogen. The output conduit supplies the H₂ gas stream from the reaction chamber to the fuel cell.

In US-A-20180337416 a portable energy generation device is disclosed to convert formic acid into released hydrogen, alleviating the need for a hydrogen tank as a hydrogen source for fuel cell power. A disadvantage of the apparatus and method described is that it is an early stage design. US 2007/231632 A1 discloses a de-hydrogenation reactor in combination with a fuel cell.

To bring the technology to the market, there are still some problems to be solved or systems to be improved. A disadvantage of the above described energy generation system is that the design makes it such that the gas quality that is being produces is less, resulting in poor applicability possibilities. Another disadvantage is that the efficiency requires improvement. A further disadvantage is that this system cannot be easily used for scale up for bigger applications.

Accordingly, there is a demand for a process and system to generate power that is flexible and portable, and ready to commercialize. There is furthermore a demand for a system that produces hydrogen containing gas with a higher purity.

### SUMMARY OF THE INVENTION

It is an object of the present invention to provide a method for starting up a reactor for producing a hydrogen containing gas and subsequently maintaining the reactor at a working temperature. A fuel cell is fluidly connected to the reactor downstream thereof and to a catalytic afterburner upstream thereof. The method comprises the following steps:
- storing a hydrogen containing gas in a vessel;
- opening the vessel and releasing the hydrogen containing gas from the vessel;
- reacting the released hydrogen containing gas intermixed with oxygen containing gas, preferably air, in a catalytic afterburner to create heat and a heated exhaust gas;
- introducing the heat and/or the heated exhaust gas to the reactor in order to heat the reactor to the working temperature;
- when the temperature of the reactor is higher than or equal to a predetermined temperature, feeding fuel to the reactor to generate hydrogen containing gas and introducing the generated hydrogen containing gas to the catalytic afterburner to further heat the reactor;
   - wherein during start-up hydrogen containing gas bypasses the fuel cell and subsequently when the reactor has reached the working temperature the hydrogen containing gas flows through the fuel cell prior to being introduced into the catalytic afterburner.

By using the hydrogen that is stored in the system itself, it is not required to use an additional heat source for starting up the process. Furthermore, by converting hydrogen in for example a fuel cell to generate electricity has a lower efficiency than catalytically burning of the hydrogen. Thus starting the process with the catalytic afterburner instead of for example electric heaters improves the total efficiency of the system significantly. Once the working temperature of the reactor is reached, it can be maintained by leading the hydrogen containing gas from the reactor via the fuel cell to the catalytic afterburner. The fuel cell can produce electricity for an external load.

The present invention also relates to a system for starting up a reactor for producing a hydrogen containing gas. It is thus a further object of the present invention to provide a system for decomposing a fuel comprising: a vessel for storing a hydrogen containing gas; a reactor for producing a hydrogen containing gas; a catalytic afterburner for burning the hydrogen containing gas from the vessel and/or from the reactor intermixed with an oxygen containing gas, such as air, to create heat and an exhaust gas, the catalytic afterburner being in fluid communication with the reactor and with the vessel; means for supplying the oxygen containing gas, such as air, to the catalytic afterburner; and means for supplying heat from the catalytic afterburner to the reactor.

It is also an object of the present invention to provide a system for reforming a fuel comprising: a vessel for storing a hydrogen containing gas, wherein the vessel is a reactor for producing a hydrogen containing gas; a catalytic afterburner for burning the hydrogen containing gas from the vessel to create heat and an exhaust gas, the catalytic afterburner being in fluid communication with the vessel; means for supplying air to the catalytic burner; and means for supplying heat from the catalytic afterburner to the reactor.

As defined in claim 11, the above systems in particular further comprise:
- a fuel cell fluidly connected to the reactor downstream thereof and to the catalytic afterburner upstream thereof;
- a bypass fluidly and directly connecting the reactor to the catalytic burner;
- a bypass valve that allows switching between directly and fluidly connecting the reactor to the catalytic afterburner and fluidly connecting the reactor to the fuel cell.

These systems enable a convenient implementation of the method according to the invention. Such implementation can be under partial automatic control or be fully automated.

The system comprises a temperature sensor arranged with the reactor to detect the temperature of the reactor. The system is configured to control the bypass valve based on the detected reactor temperature. Measurements of the temperature sensor directly act upon the bypass valve or via a controller of the system. For example, a controller, e.g. processor or microchip, can be configured to receive the detected reactor temperature from the temperature sensor and on the basis of the received temperature control the bypass valve. The controller may control the bypass valve to switch from directly providing hydrogen containing gas to the catalytic afterburner to providing hydrogen containing gas from the reactor to the fuel cell, which in turn leads to the catalytic afterburning to maintain the working temperature in the reactor.

Alternatively or additionally, such controller can be configured to control a fuel inlet into the reactor, e.g. when a predetermined threshold temperature is reached at which the reactor can produce hydrogen containing gas. In this way, an automated start-up from cold, via the predetermined temperature and to the working temperature of the reactor can be implemented.

It is understood that the predetermined temperature and the working temperature can be selected based on the fuel reforming process performed in the reactor, including parameters such as type of fuel, type of catalyst, and pressure.

### DETAILED DESCRIPTION OF THE INVENTION

Unless otherwise defined, all technical and scientific terms used herein have the same meaning as commonly understood by one of ordinary skill in the art which this invention belongs. The terminology used in the description of the invention herein is for the purpose of describing particular embodiments only and is not intended to be limiting of the invention.

The present invention is thus related to fuel cell technology. When for example a fuel cell system starts from cold to generate electricity, heat input is required for the generation of hydrogen. At start up the reactor is not sufficiently warm to produce hydrogen gas, thus for start-up hydrogen from a storage vessel is used. As storage vessel the reactor itself can be used or a separate vessel can be used. The hydrogen is preferably released slowly by using a pressure regulator or a valve. This hydrogen is then preferably mixed with the right amount of air by for example injecting the hydrogen in the air stream via a gas divider (e.g. tube(s) with multiple small holes). The formed mixed exhaust gas/air mixture is passed through the catalytic afterburner, where hydrogen and oxygen react to create mainly heat and water(vapor). The increased temperature of the catalytic afterburner will improve the efficiency of the catalyst so once it has started it keeps itself going for as long that there is fuel and oxygen present. The advantage of this method is that the reactor can be heated entirely from the catalytic afterburner, thus for example no electric heaters are required during the reformer start-up.

The main function of the catalytic afterburner is to produce heat for heating up and keeping the reformer at the optimal reaction temperature. This is done by burning the hydrogen containing exhaust gas from the fuel cell and converting it to heat. Depending on the stoichiometry of for example a fuel cell in the range of from 20% up to 40% of the hydrogen that is produced in the reformer will not be converted to electricity, this gas may be catalytically burned in the catalytic afterburner with the means of a catalyst, for example a metallic foam coated with a catalyst, such as for example a platinum-coated FeCr-alloy foam.

A catalytic afterburner can advantageously operate at higher temperatures (e.g. in the range 250 °C to 400 °C) and with hydrogen containing gas of lower purity than a fuel cell. A fuel cell typically operates at roughly 70 °C, which may be insufficient to heat the reactor to desired working temperatures. Further, CO may be present in the hydrogen containing gas from the vessel and/or reactor which would quickly deteriorate the effectiveness of the fuel cell by spoiling its catalytic membrane. However, a catalytic afterburner is not degraded by CO, nor by humidity or even water droplets in the gasses supplied to it. Though a fuel cell generally required additional purging hydrogen gas for efficient operation, a catalytic afterburner can convert practically all hydrogen supplied to it by adjusting the infeed of oxygen.

In a catalytic afterburner, a gas stream of hydrogen containing gas is mixed with a stream of oxygen containing gas such as air, and the mixture is catalytically combusted to produce heat and exhaust gas. In contrast, gas streams are separate in a fuel cell: a hydrogen containing gas is supplied to one side of membrane while an oxygen containing gas is supplied to the other side of a membrane.

The step of reacting the released hydrogen containing gas intermixed with oxygen containing gas, preferably air, in a catalytic afterburner to create heat and a heated exhaust, may comprise intermixing the hydrogen containing gas with the oxygen containing gas and supplying the resulting mixture to the catalytic afterburner. This mixing may be performed as before the gas streams are introduced into the catalytic afterburner, though it is also envisioned to mix these inside the catalytic afterburner upon introduction therein.

Preferably, the catalytic afterburner is the single burner used in the method.

It is not required to heat the reformer to its optimal working temperature to be able to convert formic acid to hydrogen. At a lower temperature the fuel, for example formic acid, is already converted. Thus the amount of hydrogen required to be stored is such that it is sufficient to heat it up to a temperature at which it is able to convert sufficient fuel to maintain a steady hydrogen supply to the catalytic afterburner to further increase the temperature of the reformer. Thus the amount of hydrogen stored, and related thereto the size of the storage vessel, is not so big that it contains all hydrogen gas needed to completely heat up to reformer to its optimum working temperature.

The predetermined temperature may be equal to or be lower than the working temperature.

For example, the working temperature is in the range of 90 °C to 130 °C, preferably 90 °C to 110 °C, more preferably 100 °C.

For example, the predetermined temperature is at least 50 °C and/or in the range of 40 °C to 90 °C, preferably 50 °C to 80 °C.

When the system is shut-down the hydrogen storage vessel is preferably refilled with hydrogen generated in the reformer which still functions due to its residual heat. This hydrogen is preferably hereafter used in the next start-up sequence.

The hydrogen containing gas is stored in a vessel. Preferably, the vessel is the reactor. Alternatively, the vessel is a separate vessel. This requires additional space, but is in some cases the preferred option.

A fuel cell is fluidly connected to the reactor downstream thereof and to the catalytic afterburner upstream thereof. In the fuel cell, the chemical energy of a fuel (e.g. hydrogen) and an oxidizing agent (e.g. oxygen) is converted in an electrochemical cell that converts into electricity through a pair of redox reactions. Fuel cells can produce electricity continuously for as long as fuel and oxygen are supplied.

There are many types of fuel cells, but they all consist of an anode, a cathode, and an electrolyte that allows ions, often positively charged hydrogen ions (protons), to move between the two sides of the fuel cell. At the anode a catalyst causes the fuel to undergo oxidation reactions that generate ions (often positively charged hydrogen ions) and electrons. The ions move from the anode to the cathode through the electrolyte. At the same time, electrons flow from the anode to the cathode through an external circuit, producing direct current electricity. At the cathode, another catalyst causes ions, electrons, and oxygen to react, forming water and possibly other products. Fuel cells are classified by the type of electrolyte they use and by the difference in startup time ranging from 1 second for proton-exchange membrane fuel cells (PEM fuel cells, or PEMFC) to 10 minutes for solid oxide fuel cells (SOFC). Individual fuel cells produce relatively small electrical potentials, about 0.7 volts, so cells are "stacked", or placed in series, to create sufficient voltage to meet an application's requirements. In addition to electricity, fuel cells produce water, heat and, depending on the fuel source, very small amounts of nitrogen dioxide and other emissions. The energy efficiency of a fuel cell is generally between 40 and 60%.

The fuel cell that is preferably used is a proton-exchange membrane fuel cell (PEMFC), a phosphoric acid fuel cell (PAFC), a solid acid fuel cell (SAFC), an alkaline fuel cell (AFC), a high-temperature fuel cell, or an electric storage fuel cell, more preferably a proton-exchange membrane fuel cell (PEMFC), even more preferably a low temperature proton-exchange membrane fuel cell (PEMFC).

Advantageously, there is a bypass that fluidly and directly connects the reactor to the catalytic burner. Advantageously, the vessel wherein hydrogen is stored is a separate vessel and is located in the bypass.

The heat of the hotter exhaust gas from the catalytic burner is preferably transported to the colder liquid in the reactor. Advantageously, the heated exhaust gas is introduced in a heat exchanger to transfer heat to the reactor in order to heat the reactor to a predetermined temperature. More preferably, more heat exchangers are being used in order to heat the reactor to a predetermined temperature.

Advantageously, in the method of the present invention, during start-up hydrogen containing gas bypasses the fuel cell and subsequently when the reactor has reached a working temperature of at least 50°C the hydrogen gas flows through the fuel cell prior to being introduced into the catalytic afterburner.

In some cases, it is preferred to also use an electric heater to partly heat up the reactor to a temperature at which it is able to convert fuel to a hydrogen containing gas. This might be useful the very first time the whole method and system is being started. Once it has been started for the first time, always some hydrogen is present to start op the reactor.

Preferably, the hydrogen containing gas is mixed with an excess amount of air, such that a mixture with less than 15% hydrogen is created prior to reaction in the catalytic afterburner, more preferably less than 10% hydrogen, even more preferably less than 4% hydrogen. The catalytic afterburner is most preferably operated by mixing the exhaust gas with an excess of air to create a mixture with less than 4% hydrogen to keep it below the LFL at ambient pressure. Preferably, the hot air that is created after the catalytic burning is passed through a radiator to heat up a heat transfer liquid. This liquid might then be used to keep the reformer at the right temperature.

Preferably, the method according to the present invention provides the fuel as a liquid fuel and the fuel is introduced into the reactor with a catalyst to provide a mixture of liquid fuel and catalyst inside the reactor. This has as advantage that separation of gas from the liquid is better, as the reaction has taken place earlier in the process.

In an alternative embodiment, the method of the present invention provides the mixture of liquid fuel and catalyst that is withdrawn from the reactor to be introduced to a second heat exchanger that is provided externally of the reactor and externally of the catalytic afterburner, the second heat exchanger being fluidly connected with the first heat exchanger by means of a closed water loop,
whereby
- the water in the closed water loop is heated by the exhaust gas in the first heat exchanger;
- the heated water in the closed water loop flows to the second heat exchanger to transfer heat to the mixture of liquid fuel and catalyst; and
- the heated mixture of liquid fuel and catalyst is introduced back into the reactor, thereby heating the reactor.

In a further embodiments, the method of the present invention provides the possibilities that air is transported directly through the reactor, preferably via one or more pipes, by which the reaction mixture is heated, or that a heat exchanger is placed inside the reactor that heats the reaction mixture. More preferably, the pipes have a small diameter to create an extensive surface, where heat exchange may be performed faster. A further possibility is that a heat exchanger is outside the reactor, and that the reaction mixture is pumped through this heat exchanger, to be heated to the desired reaction temperature. In another alternative set-up a combination of heat exchangers is used, and a heat exchange transfer liquid, e.g. a water loop.

To feed the fuel cell with hydrogen, formic acid is preferably used as hydrogen source in the reactor, thus the fuel fed to the reactor is preferably formic acid. Formic acid is a relatively non-toxic chemical. It is one of the major products formed in biomass processing and can be a convenient hydrogen carrier for fuel cells designed for portable electricity generation and use. The decomposition of formic acid into hydrogen is a promising way to solve the difficulty of hydrogen gas storage, which has severely limited the hydrogen economy. A sustainable cycle can be envisioned using formic acid to supply hydrogen.

To store hydrogen, hydrogen and CO₂ are added together to form formic acid. To release hydrogen, formic acid is decomposed into hydrogen and CO₂ in the reactor. The hydrogen storage density of formic acid is relatively high. Because formic acid is low in cost, nonflammable, readily available as exhaust from fuel cells, and contains only water and CO₂ , an automobile or other electricity-requiring device or system constructed based on the formic acid technology can be environmentally-friendly. The system is unlikely to explode or ignite. The technology can be used independently or integrated with electrical automobiles in order to provide an instant power source so that the long battery charging time can be avoided.

The present invention furthermore relates to a system for reforming a fuel as defined in claim 11. This system comprises a vessel for storing a hydrogen containing gas, wherein the vessel is either a reactor for producing the hydrogen containing gas or a separate vessel in addition to a reactor for producing a hydrogen containing gas. The system further comprises a catalytic afterburner for burning the hydrogen containing gas from the vessel and/or from the reactor to create heat and an exhaust gas, the catalytic afterburner being in fluid communication with the reactor and with the vessel; means for supplying air to the catalytic afterburner; and means for supplying heat from the catalytic afterburner to the reactor.

A fuel cell is fluidly connected to the reactor downstream thereof and to the catalytic afterburner upstream thereof.

In another embodiment, the means for supplying heat from the catalytic afterburner to the reactor comprise a first heat exchanger for heating the reactor by transferring heat from the exhaust gas, the first heat exchanger being located externally and separately from the catalytic afterburner.

A bypass fluidly and directly connects the reactor to the catalytic burner. It is then preferred that the vessel for storing the hydrogen is a separate vessel and is located in the bypass.

The system according to the present invention, further comprises a bypass valve that allows switching between directly and fluidly connecting the reactor to the catalytic afterburner and fluidly connecting the reactor to the fuel cell.

The system according to the present invention, further preferably comprises an electric heater for partly heating up the reactor to a temperature at which it is able to convert fuel to a hydrogen containing gas. This might be useful the very first time the whole method and system is being started. Once it has been started for the first time, always some hydrogen is present to start op the reactor.

Preferably, the system according to the present invention, further has the reactor comprising one or more inlets for introducing a liquid fuel and a catalyst, such that the reactor can be filled with a mixture of liquid fuel and a catalyst.

In a further preferred embodiment, the system further comprises:
- a pump for withdrawing the mixture of liquid fuel and catalyst from the reactor,
- a second heat exchanger for receiving the mixture of liquid fuel and catalyst, the second heat exchanger being provided externally of the reactor and externally of the catalytic afterburner,
- a closed heat transfer liquid loop that fluidly connects the first and the second heat exchanger,
   such that the system is suitable for
- heating the heat transfer liquid in the closed heat transfer liquid loop by heat exchange with the exhaust gas in the first heat exchanger;
- transferring heat from the heated heat transfer liquid to the mixture of liquid fuel and catalyst in the second heat exchanger; and
- introducing the heated mixture of liquid fuel and catalyst back into the reactor, thereby heating the reactor.

Preferably, the heat transfer liquid is water, glycol or oil.

The following non-limiting figures show the present invention further.
Figure 1 illustrates a system and method for starting up a reactor for producing a hydrogen containing gas wherein the reactor is used for hydrogen storage;
Figure 2 illustrates a system and method for starting up a reactor for producing a hydrogen containing gas wherein a storage vessel is used for hydrogen storage;

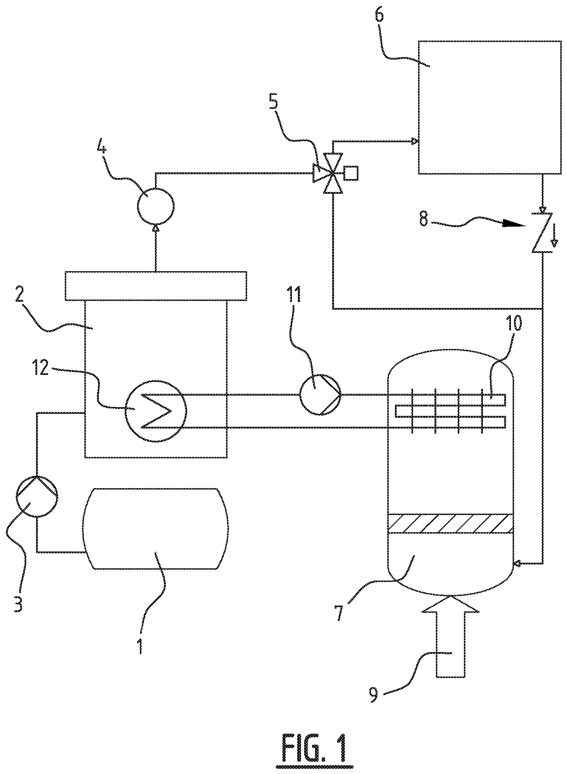

In figure 1 the tank (1) is being used for storing the fuel, for example formic acid. The fuel is fed to the reactor (2) via pump (3). The pressure in the reactor is being regulated via back pressure regulator (4). Via the valves (5) hydrogen coming from the reactor is transported to a fuel cell (6) or it might be by-passed directly to the catalytic afterburner (7). The catalytic afterburner receives the exhaust gas from the fuel cell (6) comprising some unconverted hydrogen via check valve (8) , that prevents gas entering back into the fuel cell (6). In the catalytic afterburner (7) a catalyst is present to convert the hydrogen to heat with a gas comprising oxygen, for example air that enters the reactor via inlet (9). The produced heat is transported to the reactor (2) via a heat exchanger (10) where heat transfer liquid is heated with hot gas present in the catalytic afterburner (7). Via pump (11) the heat transfer liquid is pump to heat exchanger (12) where heat is transferred to the catalyst present in reactor (2).

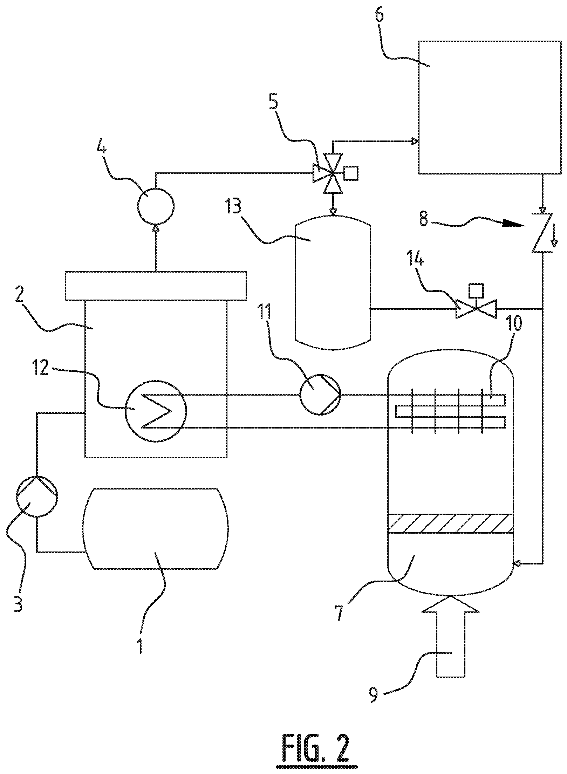

In figure 2 an additional storage vessel (13) for storing a hydrogen containing gas is present. Hydrogen is supplied to the storage vessel from reactor (2) via valve (5). Stored hydrogen from the storage vessel (13) can be supplied the catalytic afterburner (7) via valve (14). The main advantage of having the additional storage vessel (13) is the flexibility it provides in the process, more hydrogen can be stored and the reactor system can remain under pressure, while when using the reactor as storage vessel the design might be compacter.

The following, non-limiting examples are provided to illustrate the invention. Various system components can be coupled to a controller to allow automated implementation of the method of the invention, including the bypass valve (V1), the proportional valve (V2), the fuel feed (P1), and the heat transfer liquid pump (P2). For example, the system may comprise a temperature sensor coupled to the reactor and a controller configured to control the bypass valve based on a temperature signal received from the temperature sensor. The system may be configured to perform the method of the invention, even in an automated manner.

### Example 1: Control procedure - reactor used as storage vessel

To test the working of the invention, a number of situations were computer modeled. In this first modulation, the assumed starting state was a reactor that is 10 °C and the pressure inside the reactor is 15 bar. At startup the bypass valve (V1) is switch from the fuel cell to the catalytic heater, so that the gas flow will not pass through the fuel cell. Then the catalytic heater blower is started and the catalytic block is preheated if necessary (maybe needed during the winter). The back pressure regulator (BPR) is slightly opened to the point that the H₂ flow is sufficient to power on the catalytic heater to the point that the required H₂ flow is achieved. The valve is gradually opened further to compensate for the pressure lowering in the reactor. The heat transfer liquid pump (P2) is started to transfer the heat from the catalytic afterburner to the reactor. When the reactor reaches its working temperature of 100 °C the bypass valve is switched back to the fuel cell and the proportional valve (or back pressure regulator) is closed. Now the formic acid feed is started (P1) and the reactor can start producing more H₂ (and CO₂). The generation of the gas will increase the pressure back up to its pre specified working point, in this case of 15 bar. When the reactor is back at its working pressure the back pressure regulator can open again and the gas can pass through the fuel cell.

To shut down the reactor no special shut down procedure was needed because the reactor was already at pressure and was big enough to store all the needed hydrogen to start-up again a next time.

### Example 2: Control procedure - using an external storage vessel; variant 1

In this modulation, the assumed starting state was a reactor that is 10 °C and the pressure inside the reactor is 15 bar, and there is 1000 nL of H₂ stored in the storage vessel at a pressure of 15 bar.

At startup the bypass valve (V1) was switched from fuel cell to catalytic heater, to prevent that the gas flow will pass through the fuel cell. The catalytic heater blower was started. The proportional valve (V2) was slightly opened to the point that the required H₂ flow was achieved. Optionally the back pressure regulator can be opened to use the H₂ (and thus the pressure) from the reactor as well. The valve was gradually opened further to compensate for the pressure lowering in the storage vessel. Then the heat transfer liquid pump (P2) was started to transfer the heat from the catalytic afterburner to the reactor. When the reactor reached its working temperature of 100 °C the bypass valve was switched back to the fuel cell and the proportional valve was closed. Then the formic acid feed was started (P1) and the reactor started producing more H₂ (and CO₂). In case the H₂ in the reactor was used, the generation of the gas increased the pressure back up to its working point of 15 bar, otherwise the gas was immediately transferred to the fuel cell, by opening the back pressure regulator.

To shut down the fuel cell, the bypass valve (V1) from the reactor was opened to the storage vessel. Formic acid was still added to the reactor to produce more H₂ and CO₂ with the residual heat that was left in the reactor. When the storage vessel reached the correct pressure the formic acid feed was stopped and the valve from the reactor to the storage vessel was closed.

We found that the advantage of using a separate storage vessel is that during shutdown the residual heat that is still left in the reactor is used to generate the H₂ that is required for starting the reactor again. When the reactor itself is the storage vessel there will be downtime between the startup state and the working state to get the reactor back up to working pressure, as a result of depressurizing it to get the gas out. In order to return to the operating point, extra gas will have to be produced to build up pressure, which gas cannot be used in the fuel cell. Only when the pressure is high enough again, the extra gas produced is let through.

### Example 3: Control procedure - using an external storage vessel; variant 2

In this modulation the same conditions and procedure was used as in example 2, only now with a storage pressure that was higher than the working pressure. The storage volume was smaller proportional with the pressure as compared to example 2. This worked out very well, as long as the storage vessel itself and the equipment around the storage vessel (temperature sensors, pressure sensor, level sensor, valves etc) were compatible with the higher pressure. We calculated that the equipment downstream of the storage vessel could remain the same as in example 2.

### Example 4: Control procedure - using an external storage vessel; variant 3

During start up of the reactor it is possible to already start converting a small amount of formic acid at a reactor temperature which is lower than the normal working temperature of the reactor. The following procedure was tested:
At startup the bypass valve (V1) was switched from fuel cell to catalytic heater, to prevent that the gas flow will pass through the fuel cell. The catalytic heater blower was started. The proportional valve (V2) was slightly opened to the point that the required H₂ flow was achieved. Optionally the back pressure regulator can be opened to use the H₂ (and thus the pressure) from the reactor as well. The valve was gradually opened further to compensate for the pressure lowering in the storage vessel. Then the heat transfer liquid pump (P2) was started to transfer the heat from the catalytic afterburner to the reactor. When the reactor reached a predetermined threshold temperature of e.g. 80 °C a small amount of formic acid was added to the reactor and a small amount of H₂ and CO₂ was produced to slow down the consumption of the gas in the storage vessel. When the reactor was increased in temperature it was also possible to convert more formic acid, so the formic acid feed could gradually rise together with the reactor temperature. In other words, infeed of fuel into the reactor can be increased as the temperature of the reactor increases from the predetermined temperature to the normal working temperature. When the reactor reached its working temperature of 100 °C the bypass valve was switched back to the fuel cell and the proportional valve (or back pressure regulator) was closed. Now the reactor produced more H₂ (and CO₂). The generation of the gas increased the pressure back to its working pressure. With the reactor back at its working pressure the proportional valve (or back pressure regulator) was opened again and the gas was passed through the fuel cell.

### Example 5: Different variants of the first startup of the reactor system (comparative)

The system was filled in the previous examples with hydrogen in the storage vessel during shutdown what means that for the very first startup there is no H₂ available yet. Different options were modelled to find the best solution for this situation.

Solution 1: The reactor was heated with electricity, and since it was the first startup the battery which was present in the system was also empty. Thus an external power supply was used.

Solution 2: We filled the storage vessel with hydrogen from external hydrogen bottles. This was a rather practical solution to the problem of the very first start up.

Solution 3: We started the catalytic heater (and the rest of the system) with hydrogen from bottles. During shutdown the storage vessel were filled as described in the shutdown procedures above.

## Claims

1. A method for starting up a reactor (2) for producing a hydrogen containing gas and subsequently maintaining the reactor (2) at a working temperature, wherein a fuel cell (6) is fluidly connected to the reactor (2) downstream thereof and to a catalytic afterburner (7) upstream thereof, the method comprising:
- storing a hydrogen containing gas in a vessel;
- opening the vessel and releasing the hydrogen containing gas from the vessel;
- reacting the released hydrogen containing gas intermixed with oxygen containing gas, preferably air, in a catalytic afterburner (7) to create heat and a heated exhaust gas;
- introducing the heat and/or the heated exhaust gas to the reactor (2) in order to heat the reactor (2) to the working temperature;
- when the temperature of the reactor (2) is higher than or equal to a predetermined temperature, feeding fuel to the reactor (2) to generate hydrogen containing gas and introducing the generated hydrogen containing gas to the catalytic afterburner (7) to further heat the reactor (2);
- wherein during start-up hydrogen containing gas bypasses the fuel cell (6) and subsequently when the reactor (2) has reached the working temperature the hydrogen containing gas flows through the fuel cell (6) prior to being introduced into the catalytic afterburner (7).

2. The method according to claim 1, wherein at least one of:
- the working temperature is in the range of 90 °C to 130 °C, preferably 90 °C to 110 °C, more preferably 100 °C;
- the predetermined temperature is at least 50 °C and/or in the range of 40 °C to 90 °C, preferably 50 °C to 80 °C; and
- the predetermined temperature is equal to or lower than the working temperature.

3. The method according to any preceding claim, wherein the heated exhaust gas is introduced in a heat exchanger to transfer heat to the reactor (2) in order to heat the reactor (2) to a predetermined temperature.

4. The method according to any preceding claim, wherein the hydrogen containing gas is mixed with an excess amount of oxygen containing gas, preferably air, such that a mixture with less than 15% hydrogen is created prior to reaction in the catalytic afterburner (7), preferably less than 10% hydrogen, more preferably less than 4% hydrogen.

5. The method according to any preceding claim, wherein the fuel is a liquid fuel and the fuel is introduced into the reactor (2) with a catalyst to provide a mixture of liquid fuel and catalyst inside the reactor.

6. The method according to any preceding claim, wherein the fuel fed to the reactor (2) is formic acid.

7. The method according to any preceding claim, wherein the catalytic afterburner (7) is the single burner used in the method.

8. The method according to any preceding claim, wherein the vessel is the reactor (2).

9. The method according to any of the claims 1 to 7, wherein the vessel is a separate vessel (13).

10. The method according to claim 9, wherein a bypass fluidly and directly connects the reactor (2) to the catalytic afterburner (7) and the vessel is located in the bypass.

11. A system for reforming a fuel comprising:
- a vessel for storing a hydrogen containing gas, wherein the vessel is either a reactor (2) for producing the hydrogen containing gas or a separate vessel (13) in addition to a reactor (2) for producing a hydrogen containing gas;
- a catalytic afterburner (7) for burning the hydrogen containing gas from the vessel and/or from the reactor (2) intermixed with an oxygen containing gas, preferably air, to create heat and an exhaust gas, the catalytic afterburner (7) being in fluid communication with the reactor (2) and with the vessel;
- means for supplying the oxygen containing gas to the catalytic afterburner (7); and
- means for supplying heat from the catalytic afterburner (7) to the reactor (2);
- a fuel cell (6) fluidly connected to the reactor (2) downstream thereof and to the catalytic afterburner (7) upstream thereof;
- a bypass fluidly and directly connecting the reactor (2) to the catalytic burner (7);
- a bypass valve (5) that allows switching between directly and fluidly connecting the reactor (2) to the catalytic afterburner (7) and fluidly connecting the reactor (2) to the fuel cell (6); and
- a temperature sensor coupled to the reactor (2),
wherein the system, preferably a controller comprised by the system, is configured to control the bypass valve (5) based on a temperature signal received from the temperature sensor to implement the method of any of the claims 1 to 10.

12. The system according to claim 11, wherein the vessel is the separate vessel (13) and is located in the bypass.

13. The system according to claim 11 or 12, wherein the reactor (2) comprises one or more inlets (9) for introducing a liquid fuel and a catalyst, such that the reactor (2) can be filled with a mixture of liquid fuel and a catalyst.

14. The system according to anyone of claims 11 to 13, wherein the means for supplying heat from the catalytic afterburner (7) to the reactor (2) comprise a first heat exchanger (12) for heating the reactor (2) by transferring heat from the exhaust gas, the first heat exchanger (12) being located externally and separately from the catalytic afterburner, wherein the system preferably further comprises:
- a pump (11) for withdrawing the mixture of liquid fuel and catalyst from the reactor,
- a second heat exchanger for receiving the mixture of liquid fuel and catalyst, the second heat exchanger being provided externally of the reactor (2) and externally of the catalytic afterburner (7),
- a closed heat transfer liquid loop that fluidly connects the first and the second heat exchanger,
such that the system is suitable for
- heating the heat transfer liquid in the closed heat transfer liquid loop by heat exchange with the exhaust gas in the first heat exchanger;
- transferring heat from the heated heat transfer liquid to the mixture of liquid fuel and catalyst in the second heat exchanger; and
- introducing the heated mixture of liquid fuel and catalyst back into the reactor (2), thereby heating the reactor (2).

15. The system according to anyone of claims 11 to 14, wherein the catalytic afterburner (7) is the single burner in the system.

## Patentansprüche

1. Verfahren zum Anfahren eines Reaktors (2) zum Herstellen eines wasserstoffhaltigen Gases und anschließenden Halten des Reaktors (2) bei einer Arbeitstemperatur, wobei eine Brennstoffzelle (6) mit dem Reaktor (2) stromabwärts davon und mit einem katalytischen Nachbrenner (7) stromaufwärts davon fluidisch verbunden ist, das Verfahren umfassend:
- Aufbewahren eines wasserstoffhaltigen Gases in einem Behälter;
- Öffnen des Behälters und Freisetzen des wasserstoffhaltigen Gases aus dem Behälter;
- Reagieren des freigesetzten wasserstoffhaltigen Gases, das mit sauerstoffhaltigem Gas, vorzugsweise Luft, vermischt ist, in einem katalytischen Nachbrenner (7), um Wärme und ein erwärmtes Abgas zu erzeugen;
- Einführen der Wärme und/oder des erwärmten Abgases in den Reaktor (2), um den Reaktor (2) auf die Arbeitstemperatur zu erwärmen;
- wenn die Temperatur des Reaktors (2) höher als oder gleich einer zuvor bestimmten Temperatur ist, Zuleiten von Brennstoff zu dem Reaktor (2), um wasserstoffhaltiges Gas zu generieren, und Einführen des generierten wasserstoffhaltigen Gases in den katalytischen Nachbrenner (7), um den Reaktor (2) weiter zu erwärmen;
- wobei wasserstoffhaltiges Gas die Brennstoffzelle (6) während des Anfahrens umgeht und anschließend, wenn der Reaktor (2) die Arbeitstemperatur erreicht hat, das wasserstoffhaltige Gas durch die Brennstoffzelle (6) hindurch strömt, bevor es in den katalytischen Nachbrenner (7) eingeführt wird.

2. Verfahren nach Anspruch 1, wobei mindestens eines von:
- die Arbeitstemperatur in dem Bereich von 90 °C bis 130 °C, vorzugsweise 90 °C bis 110 °C, mehr bevorzugt 100 °C, liegt;
- die zuvor bestimmte Temperatur mindestens 50 °C beträgt und/oder in dem Bereich von 40 °C bis 90 °C, vorzugsweise 50 °C bis 80 °C, liegt; und
- die zuvor bestimmte Temperatur gleich oder niedriger als die Arbeitstemperatur ist.

3. Verfahren nach einem der vorstehenden Ansprüche, wobei das erwärmte Abgas in einen Wärmetauscher eingeführt wird, um Wärme an den Reaktor (2) zu übertragen, um den Reaktor (2) auf eine zuvor bestimmte Temperatur zu erwärmen.

4. Verfahren nach einem der vorstehenden Ansprüche, wobei das wasserstoffhaltige Gas mit einer überschüssigen Menge an sauerstoffhaltigem Gas, vorzugsweise Luft, gemischt wird, sodass ein Gemisch mit weniger als 15 % Wasserstoff vor einer Reaktion in dem katalytischen Nachbrenner (7) erzeugt wird, vorzugsweise weniger als 10 % Wasserstoff, mehr bevorzugt weniger als 4 % Wasserstoff.

5. Verfahren nach einem der vorstehenden Ansprüche, wobei der Brennstoff ein flüssiger Brennstoff ist und der Brennstoff mit einem Katalysator in den Reaktor (2) eingeführt wird, um ein Gemisch aus flüssigem Brennstoff und Katalysator innerhalb des Reaktors bereitzustellen.

6. Verfahren nach einem der vorstehenden Ansprüche, wobei der Brennstoff, der dem Reaktor (2) zugeleitet wird, Ameisensäure ist.

7. Verfahren nach einem der vorstehenden Ansprüche, wobei der katalytische Nachbrenner (7) der einzige Brenner, der in dem Verfahren verwendet wird, ist.

8. Verfahren nach einem der vorstehenden Ansprüche, wobei der Behälter der Reaktor (2) ist.

9. Verfahren nach einem der Ansprüche 1 bis 7, wobei der Behälter ein separater Behälter (13) ist.

10. Verfahren nach Anspruch 9, wobei eine Umgehung den Reaktor (2) mit dem katalytischen Nachbrenner (7) fluidisch und direkt verbindet und der Behälter in der Umgehung angeordnet ist.

11. System zum Reformieren eines Brennstoffs, umfassend:
- einen Behälter zum Aufbewahren eines wasserstoffhaltigen Gases, wobei der Behälter entweder ein Reaktor (2) zum Herstellen des wasserstoffhaltigen Gases oder ein separater Behälter (13) zusätzlich zu einem Reaktor (2) zum Herstellen eines wasserstoffhaltigen Gases ist;
- einen katalytischen Nachbrenner (7) zum Verbrennen des wasserstoffhaltigen Gases aus dem Behälter und/oder aus dem Reaktor (2), vermischt mit einem sauerstoffhaltigen Gas, vorzugsweise Luft, um Wärme und ein Abgas zu erzeugen, wobei der katalytische Nachbrenner (7) in Fluidkommunikation mit dem Reaktor (2) und mit dem Behälter steht;
- Mittel zum Zuführen des sauerstoffhaltigen Gases zu dem katalytischen Nachbrenner (7); und
- Mittel zum Zuführen von Wärme von dem katalytischen Nachbrenner (7) zu dem Reaktor (2);
- eine Brennstoffzelle (6), die mit dem Reaktor (2) stromabwärts davon und mit dem katalytischen Nachbrenner (7) stromaufwärts davon fluidisch verbunden ist;
- eine Umgehung, die den Reaktor (2) mit dem katalytischen Brenner (7) fluidisch und direkt verbindet;
- ein Umgehungsventil (5), das ein Umschalten zwischen einem direkten und fluidischen Verbinden des Reaktors (2) mit dem katalytischen Nachbrenner (7) und das fluidische Verbinden des Reaktors (2) mit der Brennstoffzelle (6) ermöglicht; und
- einen Temperaturfühler, der mit dem Reaktor (2) gekoppelt ist, wobei das System, vorzugsweise eine von dem System umfasste Steuerung, konfiguriert ist, um das Umgehungsventil (5) basierend auf einem Temperatursignal, das von dem Temperaturfühler empfangen wird, zu steuern, um das Verfahren nach einem der Ansprüche 1 bis 10 zu implementieren.

12. System nach Anspruch 11, wobei der Behälter der separate Behälter (13) ist und in der Umgehung angeordnet ist.

13. System nach Anspruch 11 oder 12, wobei der Reaktor (2) einen oder mehrere Einlässe (9) zum Einführen eines flüssigen Brennstoffs und eines Katalysators umfasst, sodass der Reaktor (2) mit einem Gemisch aus flüssigem Brennstoff und einem Katalysator gefüllt werden kann.

14. System nach einem der Ansprüche 11 bis 13, wobei die Mittel zum Zuführen von Wärme von dem katalytischen Nachbrenner (7) zu dem Reaktor (2) einen ersten Wärmetauscher (12) zum Erwärmen des Reaktors (2) durch Übertragen von Wärme aus dem Abgas umfassen, wobei der erste Wärmetauscher (12) außerhalb und getrennt von dem katalytischen Nachbrenner angeordnet ist, wobei das System vorzugsweise ferner umfasst:
- eine Pumpe (11) zum Entnehmen des Gemischs aus flüssigem Brennstoff und Katalysator aus dem Reaktor,
- einen zweiten Wärmetauscher zum Aufnehmen des Gemischs aus flüssigem Brennstoff und Katalysator, wobei der zweite Wärmetauscher außerhalb des Reaktors (2) und außerhalb des katalytischen Nachbrenners (7) bereitgestellt ist,
- einen geschlossenen Wärmeübertragungsflüssigkeitskreislauf, der den ersten und den zweiten Wärmetauscher fluidisch verbindet, sodass das System geeignet ist zum
- Erwärmen der Wärmeübertragungsflüssigkeit in dem geschlossenen Wärmeübertragungsflüssigkeitskreislauf durch Wärmeaustausch mit dem Abgas in dem ersten Wärmetauscher;
- Übertragen von Wärme aus der erwärmten Wärmeübertragungsflüssigkeit auf das Gemisch aus flüssigem Brennstoff und Katalysator in dem zweiten Wärmetauscher; und
- Einführen des erwärmten Gemischs aus flüssigem Brennstoff und Katalysator zurück in den Reaktor (2), wobei dadurch der Reaktor (2) erwärmt wird.

15. System nach einem der Ansprüche 11 bis 14, wobei der katalytische Nachbrenner (7) der einzige Brenner in dem System ist.

## Revendications

1. Procédé permettant de démarrer un réacteur (2) permettant de produire un gaz contenant de l'hydrogène et de maintenir par la suite le réacteur (2) à une température de travail, dans lequel une pile à combustible (6) est raccordée fluidiquement au réacteur (2) en aval de celui-ci et à un dispositif de postcombustion catalytique (7) en amont de celui-ci, le procédé comprenant :
- le stockage d'un gaz contenant de l'hydrogène dans un récipient ;
- l'ouverture du récipient et la libération du gaz contenant de l'hydrogène hors du récipient ;
- la réaction du gaz contenant de l'hydrogène libéré mélangé à du gaz contenant de l'oxygène, de préférence de l'air, dans un dispositif de postcombustion catalytique (7) pour créer de la chaleur et un gaz d'échappement chauffé ;
- l'introduction de la chaleur et/ou du gaz d'échappement chauffé au réacteur (2) afin de chauffer le réacteur (2) à la température de travail ;
- lorsque la température du réacteur (2) est supérieure ou égale à une température prédéterminée, l'alimentation en combustible du réacteur (2) pour générer un gaz contenant de l'hydrogène et l'introduction du gaz contenant de l'hydrogène généré au dispositif de postcombustion catalytique (7) pour chauffer davantage le réacteur (2) ;
- dans lequel pendant le démarrage, du gaz contenant de l'hydrogène contourne la pile à combustible (6) et par la suite lorsque le réacteur (2) a atteint la température de travail le gaz contenant de l'hydrogène s'écoule à travers la pile à combustible (6) avant d'être introduit dans le dispositif de postcombustion catalytique (7).

2. Procédé selon la revendication 1, dans lequel au moins l'un parmi :
- la température de travail est dans la plage de 90 °C à 130 °C, de préférence 90 °C à 110 °C, plus préférablement 100 °C ;
- la température prédéterminée est d'au moins 50 °C et/ou dans la plage de 40 °C à 90 °C, de préférence 50 °C à 80 °C ; et
- la température prédéterminée est égale ou inférieure à la température de travail.

3. Procédé selon l'une quelconque revendication précédente, dans lequel le gaz d'échappement chauffé est introduit dans un échangeur de chaleur pour transférer de la chaleur vers le réacteur (2) afin de chauffer le réacteur (2) à une température prédéterminée.

4. Procédé selon l'une quelconque revendication précédente, dans lequel le gaz contenant de l'hydrogène est mélangé avec une quantité en excès de gaz contenant de l'oxygène, de préférence de l'air, de telle sorte qu'un mélange avec moins de 15 % d'hydrogène est créé avant réaction dans le dispositif de postcombustion catalytique (7), de préférence moins de 10 % hydrogène, plus préférablement moins de 4 % d'hydrogène.

5. Procédé selon l'une quelconque revendication précédente, dans lequel le combustible est un combustible liquide et le combustible est introduit dans le réacteur (2) avec un catalyseur pour fournir un mélange de combustible liquide et de catalyseur à l'intérieur du réacteur.

6. Procédé selon l'une quelconque revendication précédente, dans lequel le combustible alimenté au réacteur (2) est de l'acide formique.

7. Procédé selon l'une quelconque revendication précédente, dans lequel le dispositif de postcombustion catalytique (7) est le brûleur unique utilisé dans le procédé.

8. Procédé selon l'une quelconque revendication précédente, dans lequel le récipient est le réacteur (2).

9. Procédé selon l'une quelconque des revendications 1 à 7, dans lequel le récipient est un récipient indépendant (13).

10. Procédé selon la revendication 9, dans lequel un contournement raccorde fluidiquement et directement le réacteur (2) au dispositif de postcombustion catalytique (7) et le récipient est localisé dans le contournement.

11. Système permettant de reformer un combustible comprenant :
- un récipient permettant de stocker un gaz contenant de l'hydrogène, dans lequel le récipient est soit un réacteur (2) permettant de produire le gaz contenant de l'hydrogène soit un récipient indépendant (13) en plus d'un réacteur (2) permettant de produire un gaz contenant de l'hydrogène ;
- un dispositif de postcombustion catalytique (7) permettant de brûler le gaz contenant de l'hydrogène provenant du récipient et/ou du réacteur (2) mélangé avec un gaz contenant de l'oxygène, de préférence de l'air, pour créer de la chaleur et un gaz d'échappement, le dispositif de postcombustion catalytique (7) étant en communication fluidique avec le réacteur (2) et avec le récipient ;
- un moyen permettant d'alimenter le gaz contenant de l'oxygène au dispositif de postcombustion catalytique (7) ; et
- un moyen permettant d'alimenter de la chaleur du dispositif de postcombustion catalytique (7) au réacteur (2) ;
- une pile à combustible (6) raccordée fluidiquement au réacteur (2) en aval de celle-ci et au dispositif de postcombustion catalytique (7) en amont de celle-ci ;
- un contournement raccordant fluidiquement et directement le réacteur (2) au brûleur catalytique (7) ;
- une valve de contournement (5) qui permet une commutation entre un raccordement direct et fluidique du réacteur (2) au dispositif de postcombustion catalytique (7) et un raccordement fluidique du réacteur (2) à la pile à combustible (6) ; et
- un capteur de température couplé au réacteur (2), dans lequel le système, de préférence un organe de commande compris par le système, est configuré pour commander la valve de contournement (5) en fonction d'un signal de température reçu du capteur de température pour implémenter le procédé selon l'une quelconque des revendications 1 à 10.

12. Système selon la revendication 11, dans lequel le récipient est le récipient indépendant (13) et est localisé dans le contournement.

13. Système selon la revendication 11 ou 12, dans lequel le réacteur (2) comprend une ou plusieurs entrées (9) permettant d'introduire un combustible liquide et un catalyseur, de telle sorte que le réacteur (2) peut être rempli d'un mélange de combustible liquide et d'un catalyseur.

14. Système selon l'une quelconque des revendications 11 à 13, dans lequel le moyen permettant d'alimenter de la chaleur du dispositif de postcombustion catalytique (7) au réacteur (2) comprend un premier échangeur de chaleur (12) permettant de chauffer le réacteur (2) en transférant de la chaleur provenant du gaz d'échappement, le premier échangeur de chaleur (12) étant localisé à l'extérieur et séparément du dispositif de postcombustion catalytique, dans lequel le système comprend de préférence en outre :
- une pompe (11) permettant de retirer le mélange de combustible liquide et de catalyseur du réacteur,
- un second échangeur de chaleur permettant de recevoir le mélange de combustible liquide et de catalyseur, le second échangeur de chaleur étant fourni à l'extérieur du réacteur (2) et à l'extérieur du dispositif de postcombustion catalytique (7),
- une boucle fermée de liquide de transfert de chaleur qui raccorde fluidiquement le premier et le second échangeur de chaleur, de telle sorte que le système est approprié pour
- le chauffage du liquide de transfert de chaleur dans la boucle fermée de liquide de transfert de chaleur par échange de chaleur avec le gaz d'échappement dans le premier échangeur de chaleur ;
- le transfert de chaleur du liquide de transfert de chaleur chauffé au mélange de combustible liquide et de catalyseur dans le second échangeur de chaleur ; et
- la réintroduction du mélange chauffé de combustible liquide et de catalyseur dans le réacteur (2), en chauffant de ce fait le réacteur (2).

15. Système selon l'une quelconque des revendications 11 à 14, dans lequel le dispositif de postcombustion catalytique (7) est le brûleur unique dans le système.
